# EUROPÄISCHE PATENTSCHRIFT

(11) **EP 0 994 197 B1**
(45) Veröffentlichungstag und Bekanntmachung des Hinweises auf die Patenterteilung: **03.11.2010**
(21) Anmeldenummer: 99119739.3
(22) Anmeldetag: 05.10.1999
(51) Int. Cl.: C22C 38/04, C22C 38/38

(54) **Stahllegierung**
Steel alloy
Alliage d'acier

(30) Priorität: 13.10.1998 DE 29818244 U
(43) Veröffentlichungstag der Anmeldung: 19.04.2000
(73) Patentinhaber: BENTELER AG, D-33104 Paderborn (DE)
(72) Erfinder: Töpker, Dieter Dr., 33100 Paderborn (DE)
(74) Vertreter: Ksoll, Peter

(56) Entgegenhaltungen:
- EP-B1- 0 614 495
- JP-A- 4 235 253
- JP-A- 7 197 184
- JP-A- 7 197 186
- JP-A- 8 277 437

## Beschreibung

Die Erfindung betrifft eine Stahllegierung für Rohre, Bleche oder Profile zur Herstellung von Karosserieverstärkungen für Kraftfahrzeuge, insbesondere Türaufprallträger oder A- und B-Säulenverstärkungen.

Karosserieverstärkungen dienen dem passiven Fahrgastschutz in Kraftfahrzeugen. Sie sind insbesondere bei Seiten- und Frontalcrashs hohen Beanspruchungen ausgesetzt. Es wird daher angestrebt, dass Bauteile wie Türaufprallträger oder A- und B-Säulenverstärkungen ein hohes Umformvermögen zur Energieverzehrung bzw. - absorbtion aufweisen. Dies kann durch die mechanischen Kennwerte des Werkstoffs der Bauteile erreicht werden. Üblich ist es, die am Bauteil erforderliche Festigkeit und Zähigkeit durch eine sich an die Fertigung anschliessende Wärmebehandlung einzustellen.

Aus der JP-A 7 197 186 ist eine Stahllegierung für Rohre, Bleche oder Profile mit folgender Zusammensetzung bzw. Gew.-% bekannt: C 0,1 - 0,35 %, Mn 1 - 3,5 %, Cr < 1,5 %, Mo < 1,5 %, Al 0.02 - 0.1 %, B < 0,01 %, Ti 0,02 - 0,1 %, V < 0,1 %, Nb < 0,1 %, N < 0,01 %, Si < 0,5 %, P < 0,03 %, S < 0,02 % und Rest Eisen und übliche Verunreinigungen. Mit diesem Stahl lässt sich ein Festigkeitsniveau von > 1.200 N/mm² erreichen.

Aus der US-A-4 406 713 ist ein hochfester und hochzäher Stahl bekannt, vorzugsweise zur Herstellung von Drähten oder Stäben, der 0,05 bis 0,3 % Kohlenstoff, 0,3 bis 2,5 Mangan, bis 1,5 % Silizium und wenigstens einen Karbid- und Nitritbildner aus der Gruppe Niob, Vanadium, Titan und Zirkon enthält. Dieser Stahl wird nach dem Austenitisieren derart abgeschreckt, dass er zwischen 5 und 65 % Ferrit, Rest Martensit enthält.

Beim Kaltumformen eines solchen martensitaushärtenden Stahles, der eine Streckgrenze von über 1.000 N/mm² aufweist, unterliegen die Umformwerkzeuge hohen Beanspruchungen und verstärktem Verschleiß. Dies wirkt sich nachteilig auf die Produktionskosten aus, insbesondere bei Massenartikeln, wie Karosserieverstärkungen für Kraftfahrzeuge darstellen.

Es ist daher Aufgabe der Erfindung, eine für einen Kaltumformvorgang vorteilhafte Stahllegierung aufzuzeigen für Rohre, Bleche oder Profile zur Herstellung von Karosserieverstärkungen für Kraftfahrzeuge, welche bei ausreichend hoher Festigkeit eine gute Energieverzehrung gewährleisten.

Die Lösung dieser Aufgabe besteht nach der Erfindung in einer Stahllegierung gemäß Anspruch 1.

Danach besteht die Stahllegierung in Gewichtsprozenten ausgedrückt aus 0,1 bis 0,17 % Kohlenstoff, 2,0 bis 2,8 % Mangan, 0,4 bis 0,8 % Chrom, 0,1 bis 0,35 % Molybdän, 0,03 bis 0,07 % Aluminium, 0,002 bis 0,003 % Bor, 0,0001 bis 0,005 % Titan, 0,08 bis 0,012 % Vanadium, 0,025 bis 0,06 % Niob, 0,0001 bis 0,10 % Zirkonium, 0,01 bis 0,05 % Stickstoff, bis zu 0,3 % Silizium sowie bis zu 0,025 % Phosphor und 0,010 % Schwefel, wobei der Rest Eisen ist einschließlich erschmelzungsbedingter Verunreinigungen und die Summe der Legierungskomponenten Titan, Vanadium und Niob zwischen 0,16 und 0,25 % liegt.

Die aus der Stahllegierung bestehenden Rohre, Bleche oder Profile hergestellten Karosserieverstärkungen besitzen eine hohe Festigkeit mit einer Streckgrenze Rₑ von 1.000 N/mm² und höher bei bauteilgerechtem Energieumwandlungsvermögen. Im Falle eines Aufpralls setzen die Karosserieverstärkungen den eingeleiteten Kräften einen ausreichenden Widerstand entgegen unter definierter Energieverzehrung und Umformarbeit ohne zu brechen. Dies trägt wesentlich zur Erhöhung der Sicherheit der Fahrgastzelle eines Kraftfahrzeuges bei.

Die Komponenten der Stahllegierung sind so aufeinander abgestimmt, dass die geforderten mechanischen Kennwerte erreicht werden und die Stahllegierung bzw. die hieraus hergestellten Rohre, Bleche und Profile vorteilhaft kalt umgeformt werden können. Hierbei zeichnet sich die Stahllegierung durch ihre geringe Abrasivität bzw. Verschleißwirkung im Umformwerkzeug bei der Verformung aus. Die Umformwerkzeuge sind folglich einer wesentlich geringeren mechanischen Belastung unterworfen. Diese Maßnahme führt zu einer deutlichen Steigerung der Standzeiten der Umformwerkzeuge.

Es handelt sich um einen weichen, kohlenstoffarmen Stahl. Der heruntergesetzte Kohlenstoffanteil bewirkt eine höhere Verformbarkeit im austenitischen Gefügezustand. Der Mangangehalt gewährleistet eine ausreichend hohe Festigkeit und Härtbarkeit. Darüber hinaus wirkt sich das Mangan günstig auf die Schweißbarkeit aus. Wesentlich ist ferner die Zugabe von Zirkonium, welches die Mikrohärtung verbessert. Zur verbesserten Mikrohärtung tragen ebenfalls die Legierungskomponenten Titan, Vanadium und Niob bei. Das analysemäßig vorgesehene Verhältnis von Titan, Vanadium und Niob, welches in der Summe zwischen 0,1 und 0,25 % liegt, hat sich als besonders günstig erwiesen.

Wesentliche Legierungskomponente ist ferner Chrom in Verbindung mit Molybdän, Aluminium und Bor. Chrom erhöht die Festigkeit. Das Molybdän erhöht die Zugfestigkeit, insbesondere die Warmfestigkeit und wirkt sich günstig auf die Schweißbarkeit aus. Durch die Zugabe von Aluminium wird die Feinkornbildung unterstützt. Schließlich muss auch Stickstoff genannt werden, dessen Anteil einen Einfluss auf die geforderten Eigenschaften der Stahllegierung hat. Aus der Affinität zu Titan, Vanadium, Zirkonium und Aluminium resultiert eine Gefügeverfeinerung, was sich positiv auf das Energieumwandlungsvermögen der aus der Stahllegierung hergestellten Karosserieverstärkungen auswirkt.

Für den vorgesehenen Verwendungszweck der Stahllegierung weist dieser eine optimierte Zähigkeit auf. Ferner ist eine gute Verformbarkeit und Schweißbarkeit gegeben. Hiermit verbindet sich auch der Vorteil, dass neben dem Einsatz für nahtlose Rohre auch die Herstellung von für die vorgesehene Weiterverarbeitung teilweise besser geeigneten längsnahtgeschweißten Rohren möglich ist. Zur Weiterverarbeitung gelangen selbstverständlich auch aus der erfindungsgemäßen Stahllegierung hergestellte Bleche oder Profile.

Die Einstellung der mechanischen Kennwerte ist durch das Zusammenwirken der Legierungskomponenten mit der gezielt bestimmten Umformtemperatur beim Walzen zum Warmband begründet. Hierbei wird eine solche Haspeltemperatur gewählt, dass im Fertigstich eine Temperatur T ≤ 480 °C am Haspel realisiert werden kann. Auf diese Weise kann durch das Zusammenspiel zwischen den einwirkenden festigkeitssteigernden Elementen wie Chrom, Molybdän, Titan bzw. Niob auf der einen Seite und Stickstoff auf der anderen Seite ein vollständiges martensitisches Gefüge erzeugt werden. Dies deshalb, weil es einen geringen Kohlenstoffgehalt hat, jedoch für einen Festigkeitslevel von > 1200 N/mm² eine noch gute Verformbarkeit aufweist. Das Verhältnis Re/Rm liegt bei ≤ 0,7.

Ein Türaufprallträger (Anspruch 2) ebenso wie eine A- oder B-Säulenverstärkung (Anpruch 3) besitzt die für ihren Einsatz im Kraftfahrzeug geforderte Festigkeit bei hohem Umformvermögen durch Energieverzehrung. Dies trägt ganz wesentlich zur Sicherung der Fahrgastzelle eines Kraftfahrzeuges bei.

## Patentansprüche

1. Stahllegierung für Rohre, Bleche und Profile zur Herstellung von Karosserieverstärkungen für Kraftfahrzeuge, insbesondere Türaufprallträger oder A- und B-Säulenverstärkungen, bestehend - in Gewichtsprozenten ausgedrückt - aus
| | |
|---|---|
| Kohlenstoff (C) | 0,10 bis 0,17 % |
| Mangan (Mn) | 2,00 bis 2,80 % |
| Chrom (Cr) | 0,40 bis 0,80 % |
| Molybdän (Mo) | 0,10 bis 0,35 % |
| Aluminium (Al) | 0,03 bis 0,07 % |
| Bor (B) | 0,002 bis 0,003 % |
| Titan (Ti) | 0,0001 bis 0,05 % |
| Vanadium (V) | 0,08 bis 0,12 % |
| Niob (Nb) | 0,025 bis 0,06 % |
| Zirkonium (Zr) | 0,0001 bis 0,10 % |
| Stickstoff (N) | 0,01 bis 0,05 % |
| Silizium (Si) | max. 0,3 % |
| Phosphor (P) | max. 0,025 % |
| Schwefel (s) | max. 0,010 % |
Rest Eisen einschliesslich erschmelzungsbedingter Verunreinigungen, wobei die Summe der Legierungskomponenten Titan, Vanadium und Niob zwischen 0,16 und 0,25 % liegt, wobei ein Walzen zum Warmband erfolgt mit einer Haspeltemperatur T ≤ 480 °C und wobei ein vollständig martensitisches Gefüge vorliegt mit einer Festigkeit Rm >1.200 N/mm², wobei das Verhältnis Re/Rm ≤ 0,7 ist.

2. Türaufprallträge aus einer Stahllegierung gemäß Anspruch 1.

3. A- und B-Säulenverstärkung für Kraftfahrzeuge aus einer Stahllegierung gemäß Anspruch 1.

## Claims

1. Steel alloy for tubes, sheets and profiled pieces for the production of body shell reinforcements for motor vehicles, in particular door impact supports or A and B pillar reinforcements, consisting - expressed as percentages by weight - of
| | |
|---|---|
| carbon (C) | 0.10 to 0.17% |
| manganese (Mn) | 2.00 to 2.80% |
| chromium (Cr) | 0.40 to 0.80% |
| molybdenum (Mo) | 0.10 to 0.35% |
| aluminium (Al) | 0.03 to 0.07% |
| boron (B) | 0.002 to 0.003% |
| titanium (Ti) | 0.0001 to 0.05% |
| vanadium (V) | 0.08 to 0.12% |
| niobium (Nb) | 0.025 to 0.06% |
| zirconium (Zr)¹ | 0.0001 to 0.10% |
| nitrogen (N) | 0.01 to 0.05% |
| silicon (Si) | max. 0.3% |
| phosphorus (P) | max. 0.025% |
| sulphur (S) | max. 0.010%, |
¹ Translator's note: the German says Zn, which is zinc.
the remainder being iron, including smelting-related impurities, with the sum of the alloy components titanium, vanadium and niobium being between 0.16 and 0.25%, the material being rolled into a hot strip at a coiling temperature of T ≤ 480 °C and forming a complete martensitic structure with a tensile strength Rm > 1,200 N/mm², the Re/Rm ratio being ≤ 0.7.

2. Door impact support made from a steel alloy according to claim 1.

3. A and B pillar reinforcement for a motor vehicle, made from a steel alloy according to claim 1.

## Revendications

1. Alliage d'acier pour tubes, tôles et profilés pour la production de renforts de carrosserie pour véhicules automobiles, en particulier de barres de renfort de portes ou de renforts de montants A et B, consistant, exprimés en pourcents en poids, en
| | |
|---|---|
| carbone (C) | 0,10 à 0,17 % |
| manganèse (Mn) | 2,00 à 2,80 % |
| chrome (Cr) | 0,40 à 0,80 % |
| molybdène (Mo) | 0,10 à 0,35 % |
| aluminium (Al) | 0,03 à 0,07 % |
| bore (B) | 0,002 à 0,003 % |
| titane (Ti) | 0,0001 à 0,05 % |
| vanadium (V) | 0,08 à 0,12 % |
| niobium (Nb) | 0,025 à 0,06 % |
| zirconium (Zr) | 0,0001 à 0,10 % |
| azote (N) | 0,01 à 0,05 % |
| silicium (Si) | max. 0,3 % |
| phosphore (P) | max. 0,025 % |
| soufre (S) | max. 0,010 % |
le reste de fer y compris les impuretés dues à la fusion, où la somme des composants de l'alliage titane, vanadium et niobium est située entre 0,16 et 0,25 %, où un laminage en le feuillard à chaud a lieu avec une température d'enrouleuse T ≤ 480°C et où une structure totalement martensitique existe avec une résistance mécanique Rm > 1200 N/mm², où le rapport Re/Rm est inférieur ou égal à 0,7.

2. Barres de renfort de portes en un alliage d'acier selon la revendication 1.

3. Renfort de montants A et B pour véhicules automobiles en un alliage d'acier selon la revendication 1.
